# EUROPEAN PATENT APPLICATION

(11) **EP 4 395 029 A1**
(43) Date of publication of application: **03.07.2024**
(21) Application number: 22925660.7
(22) Date of filing: 18.10.2022
(51) Int. Cl.: H01M 50/213, H01M 50/249, H01M 50/258

(54) **CELL MODULE, POWER BATTERY, AND ELECTRIC VEHICLE**

(30) Priority: 11.02.2022 CN 202220281117 U
(71) Applicant: Eve Power Co., Ltd., Jingmen Hubei 448000 (CN)
(72) Inventor: FENG, Yanqiang, Jingmen, Hubei 448000 (CN)
(74) Representative: Herrero & Asociados, S.L.
(86) International application number: PCT/CN2022/125952
(87) International publication number: WO 2023/151305

(57) **Abstract**

The present application relates to the technical field of power batteries, and discloses a cell module, a power battery, and an electric vehicle. The cell module comprises a tray and a plurality of cylindrical cells; the cylindrical cells are arranged on the tray; the sum of the projection areas of the plurality of cylindrical cells on the tray in the height direction of the cylindrical cells is S, the projection area of the tray in the height direction of the cylindrical cells is A, and S/A is greater than or equal to 0.67.

## Description

The present application claims priority of the Chinese patent application No. 202220281117.1, filed on February 11, 2022, and contents of which are incorporated herein by its entireties.

### TECHNICAL FIELD

The present disclosure relates to the field of power batteries, and in particular to a cell pack , a power battery, and an electric vehicle.

### BACKGROUND

In recent years, new energy vehicles are developing dramatically, especially those are powered by lithium batteries. In the lithium batteries, cylindrical cells are widely used in power systems. Since each cylindrical cell has a small power capacity, one series of cells may have a large number of cells.

A size to energy storage volume ratio is an important performance parameter of the power battery. The size to energy storage volume ratio is a ratio of the energy storage volume of the battery to the size of the battery. In the art, the power battery has a poor space utilization rate, resulting in a low size to energy storage volume ratio, which cannot meet a user's demand for an endurance life of an electric vehicle.

### SUMMARY OF THE DISCLOSURE

The present disclosure provides a cell pack, which may improve a space utilization rate of the cylindrical cell, to increase the size to energy storage volume ratio of the cell pack to increase an endurance life of a power battery.

The present disclosure provides a cell pack including a tray and a plurality of cylindrical cells. The plurality of cylindrical cells are disposed on the tray. The plurality of cylindrical cells are projected onto the tray along a height direction of the cylindrical cells to generate a plurality of projections, and a sum of areas of the plurality of projections is S. An area of a projection of the tray along the height direction of the cylindrical cells is A, where S/A 0.67.

The present disclosure further provides a power battery including a case and the cell pack as described in the above. The cell pack is arranged inside the case.

The present disclosure further provides an electric vehicle including the power battery.

### BRIEF DESCRIPTION OF THE DRAWINGS

FIG. 1 is an explosive view of a power battery according to an embodiment of the present disclosure.
FIG. 2 is an explosive view of a cell pack according to an embodiment of the present disclosure.
FIG. 3 is a top view of a tray assembled with the cell according to an embodiment of the present disclosure.
FIG. 4 is a top view of a case according to an embodiment of the present disclosure.
FIG. 5 is a top view of a partial structure of the power battery according to an embodiment of the present disclosure.
FIG. 6 is a cross-sectional view of a partial structure of the power battery according to an embodiment of the present disclosure.

### Reference numerals in the drawings:

100, case; 11, longitudinal beam; 12, cross beam; 13, positioning slot; 131, first positioning slot wall; 132, second positioning slot wall; 14, pressure relief cavity; 200, cell pack; 21, tray; 211, limiting slot; 2111, first limiting slot wall; 2112, second limiting slot wall; 212, through hole; 213, first side wall; 214, second side wall; 220, cell group; 22, cylindrical cell; 23, liquid cooling plate; 24, integration assembly; 25, polyurethane foam layer; 26, structural adhesive layer; 300, upper cover;
a, element mounting cavity; b, cell mounting cavity; X, first direction; Y, second direction.

### DETAILED DESCRIPTION

The present disclosure is described below by referring to the accompanying drawings and embodiments. It will be understood that the specific embodiments described herein are for the purpose of explaining the present disclosure only. To be noted that, for ease of description, only portions relevant to the present disclosure, instead of all structures, are shown in the accompanying drawings.

In the description of the present disclosure, unless otherwise expressly specified, the terms "inter-connected", "connected", and "fixed" shall be understood broadly. For example, connection may be fixed connection, detachable connection, integration into a one-piece structure; or may be mechanical connection or electrical connection; or may be direct connection or indirect connection through an intermediate medium; or may be internally connection between two elements or interaction between two elements. Any ordinary skilled person in the art shall understand specific meanings of the above terms in the present disclosure case by case.

In the description of the present disclosure, unless otherwise expressly specified, a first feature being "above" or "under" a second feature may include the first feature directly contacting the second feature; or include the first feature indirectly contacting the second feature through another feature disposed therebetween. In addition, the first feature being "above", "on" and "on top of" the second feature may include the first feature being directly above and diagonally above the second feature, or may simply indicate that the first feature is horizontally higher than the second feature. The first feature being "below", "under" and "beneath" the second feature may include the first feature being directly below and diagonally below the second feature, or may simply indicate that the first feature is horizontally lower than the second feature.

In the description of the present disclosure, the terms "up", "down", "right", and other orientations or positional relationships refer to orientations or positional relationships shown in the accompanying drawings. The orientations or positional relationships are used only to facilitate description and to simplify operations, but do not indicate or imply that a device or an element referred to must be oriented, arranged and operated in a particular orientation. Furthermore, the terms "first" and "second" are used to distinguish various features descriptively but do not have special meanings.

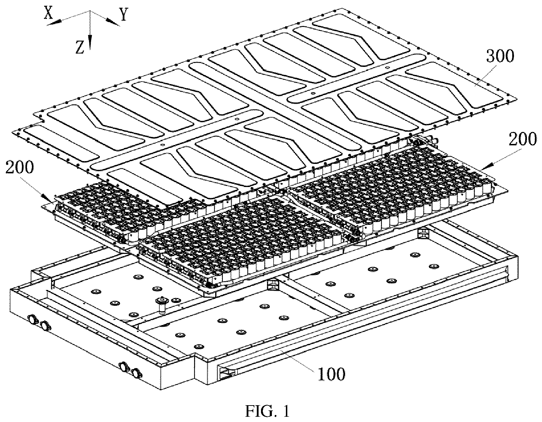

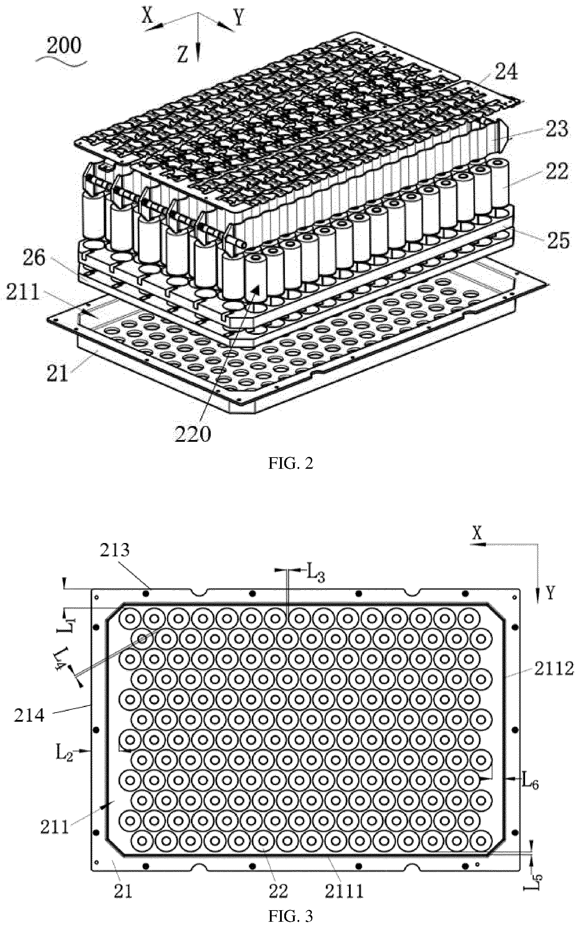

As shown in FIG. 1, the present embodiment provides a power battery including a case 100, a cell pack 200, and an upper cover 300. A top of the case 100 has an opening. The upper cover 300 is fixed to the case 100 to cooperatively define an inner cavity to receive the cell pack 200. As shown in FIG. 2, the cell pack 200 includes a tray 21 and a plurality of rows of cell groups 220. The cell groups 220 are disposed on the tray 21. Each row of the cell groups 220 includes a plurality of cylindrical cells 22. In the present embodiment, each cylindrical cell 22 is cylindrical. The cylindrical cell 22 is vertically disposed on the tray 21 to improve stability of the cylindrical cells 22 when being disposed on the tray 21.

The cell pack 200 further includes an integration assembly 24, arranged above the cylindrical cells 22 to enable the plurality of cylindrical cells 22 to be connected to each other in parallel and in series.

In an embodiment, the cell pack 200 further includes a liquid cooling plate 23. The liquid cooling plate 23 contacts the cylindrical cells 22. The liquid cooling plate 23 may control temperatures of the cylindrical cells 22 by heat exchange to prevent the temperatures of the cylindrical cells 22 from being abnormal.

In order to reduce the number of liquid cooling plates 23, every two adjacent rows of the plurality of rows of cell groups 220 form one set. For each set, one liquid cooling plate 23 is disposed between the two adjacent rows of cell groups 220.

In some embodiments, a plurality of liquid cooling plates 23 are connected to each other by pipe joints, such that heat exchanging medium may be injected into the plurality of liquid cooling plates 23, and a piping structure is simplified.

In some embodiments, the cell pack 200 further includes a polyurethane foam layer 25 and a structural adhesive layer 26. Each of the polyurethane foam layer 25 and the structural adhesive layer 26 sleeves an outside of each cylindrical cell 22 to fill a gap between every two adjacent cylindrical cells 22 and to provide a cushioning effect to the cell pack 200.

In some embodiments, a portion of each liquid cooling plate 23 is embedded in the polyurethane foam layer 25 to improve a fixing effect of the liquid cooling plate 23.

In order to improve an endurance life of the power battery, the plurality of cylindrical cells 22 are projected onto the tray 21 along a height direction of the cylindrical cells 22 to generate a plurality of projections, a sum of areas of the plurality of projections is S; and an area of a projection of the tray 21 along the height direction of the cylindrical cells 22 is A, where S/A≥ 0.67. By controlling the ratio of the sum of the areas of the plurality of projections of the plurality of cylindrical cells 22 to the area of the projection of the tray 21 along the height direction of the cylindrical cells 22, space occupation of the cylindrical cells 22 in the cell pack 200 may be increased without changing a height of the cylindrical cell 22. In this way, the size to energy storage volume ratio of the cylindrical cell 22 may be ensured, and the endurance life of the power battery may be ensured.

It is understood that, in a case that each cell pack 200 has N cylindrical cells 22 and each cylindrical cell 22 has a radius of r, the sum S of the areas of the projections of the plurality of cylindrical cells 22 onto the tray 21 satisfies: S=Nπr². The tray 21 is rectangular, a length of the rectangular tray 21 is C, and a width of the rectangular tray 21 is K. In this case, the area A of the projection of the tray 21 along the height direction of the cylindrical cells 22 satisfies: S/A= Nπr²/CK.

In the present embodiment, the radius r of the cylindrical cell 22 is 23 mm, the number N of the cylindrical cells 22 in each cell pack 200 is 180, the length C of the tray 21 is 786 mm, and the width of the tray 21 is 504 mm. In this case, the ratio of the S to the A is 0.75.

Exemplarily, the ratio of the S to the A may be 0.7, 0.8, or 0.9.

In an embodiment, a sum of volumes of the plurality of cylindrical cells 22 is V₁, and a product of the area of the projection of the tray 21 along the height direction of the cylindrical cells 22 multiplied by the height of the cell pack 200 is V₂. In this case, V₁/V₂=0.6 to 0.75. Within the volume ratio range, the space occupation of cylindrical cells 22 in the cell pack 200 is ensured. In this way, the size to energy storage volume ratio of the cell pack 200 is ensured, and the endurance life of the power battery may be ensured. Exemplarily, the ratio of V₁ to V₂ may be 0.64, 0.65, 0.67, 0.7, or 0.72.

In the present embodiment, the height H₃ of the cell pack 200 is 104 mm, and the height H₄ of the cylindrical cell 22 is 96.63 mm. Since V₁= Nar²H₃ and V₂= CKH₄, the ratio of V₁ to V₂ is 0.7.

In some embodiments, the ratio of V₁ to V₂ is 0.64. With the ratio of 0.64, the space within the cell pack 200 can be optimally utilized, and a waste of space can be avoided.

In addition, by controlling the ratio of S to A and the ratio of V₁ to V₂, a side of each cylindrical cell 22 has a larger surface area, facilitating heat dissipation from each cylindrical cell 22, preventing the overall cell pack 200 from having an excessively high temperature.

As shown in FIG. 3, the tray 21 is rectangular. The rectangular tray 21 includes a first side wall 213 and a second side wall 214 adjacent to the first side wall 213. The first side wall 213 extends along a first direction X, and the second side wall 214 extends along a second direction Y. The first direction X is perpendicular to the second direction Y. A distance L₁ between the first side wall 213 and cylindrical cells 22 adjacent to the first side wall 213 is not less than 60 mm, such as 65 mm, 70 mm, or 75 mm. A distance L₂ between the second side wall 214 and the cylindrical cells 22 adjacent to the second side wall 214 is not less than 80 mm, such as 85 mm, 90 mm, or 95 mm. When the distance L₁ between the first side wall 213 and the adjacent cylindrical cells 22 and the distance L₂ between the second side wall 214 and the adjacent cylindrical cells 22 satisfy the above distance ranges, the tray 21 may be fixedly arranged in the case 100 easily, and the tray 21 may be assembled with the case 100 in a power battery having a common specification.

To be noted that, the cylindrical cells 22 adjacent to the first side wall 213 are the cylindrical cells 22 disposed closest to the first side wall 213. As shown in FIG. 3, the tray 21 includes two first side walls 213, and the cylindrical cells 22 adjacent to the two first side walls 213 are the first row of cylindrical cells 22 arranged in the second direction Y and the last row of cylindrical cells 22 arranged in the second direction Y.

The cylindrical cells 22 adjacent to the second side wall 214 are the cylindrical cells 22 disposed closest to the second side wall 214. As shown in FIG. 3, the tray 21 includes two second side walls 214, and the cylindrical cells 22 adjacent to the two second side walls 214 are the first row of cylindrical cells 22 arranged in the first direction X and the last row of cylindrical cells 22 arranged in the first direction X.

In the present embodiment, the plurality of cylindrical cells 22 in each row of cell group 220 are arranged along the first direction X. The plurality of rows of cell groups 220 are arranged along the second direction Y. In each row of cell groups 220, a distance L₃ between two adjacent cylindrical cells 22 is not less than 1 mm, such that the adjacent cylindrical cells 22 satisfy a minimum insulation requirement. Moreover, the distance L₃ between the two adjacent cylindrical cells 22 may be adjusted based on a size of the tray 21 along the first direction X and the number of cylindrical cells 22 to be received in the tray 21. In this way, the structure may be compatible with various models of power batteries.

A distance L₄ between the two adjacent cylindrical cells 22 from two adjacent rows of cell groups 220 is not less than 3 mm, such that a sufficient space is defined between the two adjacent rows of cell groups 220 to receive the liquid cooling plate 23. It is understood that, when the distance L₄ between the two adjacent cylindrical cells 22 is less than 3 mm, the corresponding liquid cooling plate 23 is thin, and a channel that is inside the liquid cooling plate 23 and receives the heat exchange medium has a small size. In this case, flowing of the heat exchange medium may be affected, and the heat exchange effect the heat exchange medium.

In some embodiments, a distance between two adjacent cylindrical cells 22 is equal to a thickness of the liquid cooling plate 23, so as to ensure the liquid cooling plate 23 to contact the cylindrical cells 22 disposed at two sides of the liquid cooling plate 23.

In the present embodiment, cylindrical cells 22 in one row of the two adjacent rows of cell groups 220 are misaligned to cylindrical cells 22 in the other one row of the two adjacent rows of cell groups 220. In a case where the number of rows of cell groups 220 remains unchanged and the size of each cylindrical cell 22 remains unchanged, a size of the plurality of rows of cell groups 220 along the second direction Y may be reduced when the cylindrical cells 22 in the two adjacent rows of cell groups 220 are misaligned to each other. In this way, the plurality of cylindrical cells 22 may be arranged more compactly, and therefore, the capacity of the tray 21 for receiving the cylindrical cells 22 may be increased.

In an embodiment, the distance L₃ between two adjacent cylindrical cells 22 in each row of cell groups 220 is equal to the distance L₄ between two adjacent cylindrical cells 22 in two adjacent rows of cell groups 220. That is, any two adjacent cylindrical cells 22 has an equal interval distance. In this way, centers of any three adjacent cylindrical cells 22 may be connected to each other to form an equilateral triangle. In this case, thermal management for the cylindrical cells 22 may be optimal, and thermal resistance of liquid flow in each liquid cooling plate 23 may be optimal, such that safety of the power battery may be improved.

As shown in FIGS. 2 and 3, the tray 21 defines a limiting slot 211. The cylindrical cells 22 are received in the limiting slot 211. The polyurethane foam layer 25 and the structural adhesive layer 26 are disposed in the limiting slot 211. The limiting slot 211 may limit positions of the polyurethane foam layer 25 and the structural adhesive layer 26, such that positional accuracy of the cylindrical cells 22 may be improved.

As shown in FIG. 3, the limiting slot 211 has a first limiting slot wall 2111 extending along the first direction X and a second limiting slot wall 2112 extending along the second direction Y. A distance L₅ between the first limiting slot wall 2111 and the cylindrical cells 22 adjacent to the first limiting slot wall 2111 is not less than 2 mm, ensuring that the cylindrical cells 22 are spaced apart from the first limiting slot wall 2111, such that a portion of the polyurethane foam layer 25 and the structural rubber layer 26 may be disposed between the cylindrical cells 22 and the first limiting slot wall 2111 to provide a cushioning effect on the cylindrical cells 22 and to fix the cylindrical cells 22. It is understood that, the distance L₅ between the first limiting slot wall 2111 and the adjacent cylindrical cells 22 may be adjusted based on fixation requirements about the tray 21 in the case 100.

In the present embodiment, the cylindrical cells 22 adjacent to the first limiting slot wall 2111 are cylindrical cells 22 disposed closest to the first limiting slot wall 2111. As shown in FIG. 3, the tray has two first limiting slot walls 2111. the cylindrical cells 22 adjacent to the two first limiting slot walls 2111 are cylindrical cells 22 in the first row of cell groups arranged along the second direction Y and cylindrical cells 22 in the last row of cell groups arranged along the second direction Y.

In an embodiment, a distance L₆ between the second limiting slot wall 2112 and cylindrical cells 22 adjacent to the second limiting slot wall 2112 is not less than 22 mm. The distance L₆ between the second limiting slot wall 2112 and the adjacent cylindrical cells 22 is mainly determined based on a size of the pipe joint arranged at an end of the liquid cooling plate 23. It is to be ensured that a space between the cylindrical cells 22 and the second limiting slot wall 2112 is sufficient to receive the pipe joint. It is to be understood that the distance L₆ between the second limiting slot wall 2112 and the adjacent cylindrical cells 22 may be adjusted based on the size of the pipe joint that is used in practice.

In the present embodiment, the cylindrical cells 22 adjacent to the second limiting slot wall 2112 are the cylindrical cells 22 disposed closest to the second limiting slot wall 2112. As shown in FIG. 3, the tray 21 has two second limiting slot walls 2112. The plurality of rows of cell groups 220 arranged along the second direction Y may be denoted as a first row of cell groups, a second row of cell groups, a third row of cell groups, ... till a twelfth row of cell groups. The two second limiting slot wall 2112 are a right second limiting slot wall 2112 and a left second limiting slot wall 2112 arranged along the first direction X. The cylindrical cells 22 adjacent to the right second limiting slot wall 2112 are first cylindrical cells 22 in even numbered rows of cell groups arranged along the first direction X. The cylindrical cells 22 adjacent to the left second limiting slot wall 2112 are last cylindrical cells 22 in odd numbered rows of cell groups arranged along the first direction X.

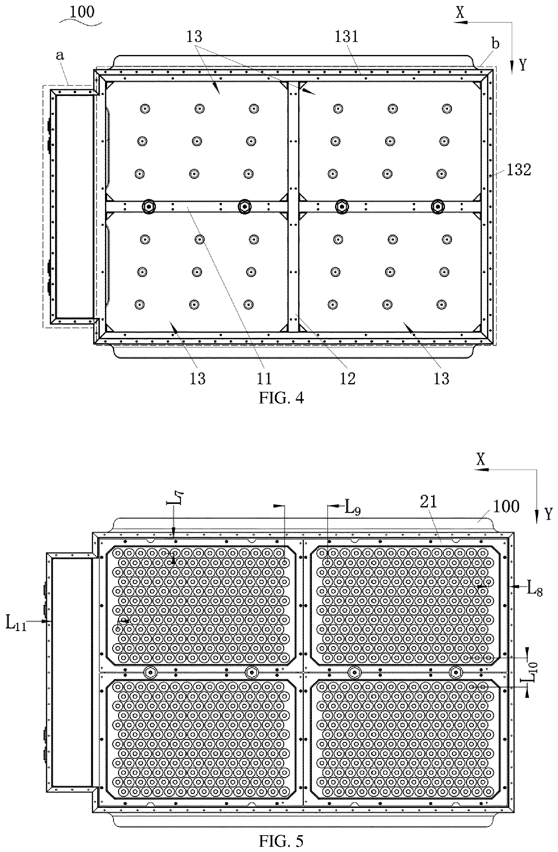

As shown in FIGS. 4 and 5, in the present embodiment, the case 100 defines a positioning slot 13, and the tray 21 is received in the positioning slot 13, such that positioning accuracy of the tray 21 may be improved. In the present embodiment, the tray 21 includes a tray body and a fixation flange surrounding a circumference of the tray body. The positioning slot 13 is a stepped slot, including an upper slot and a lower slot. A size of the upper slot is larger than a size of the lower slot. A tab is arranged on a side wall of the case 100. A cross beam 12 and a longitudinal beam 11 are arranged inside the case 100. The cross beam 12 and the longitudinal beam 11 are provided to cross with each other, such that the cross beam 12, the longitudinal beam 11, and the tab cooperatively define the lower slot. When the tray 21 is assembled with the case 100, a tray body is received in the lower slot, and the fixation flange is received in the upper slot and laps over the tab, the cross beam 12 and the longitudinal beam 11.

In an embodiment, the upper slot of the positioning slot 13 has a first positioning slot wall 131 extending in the first direction and a second positioning slot wall 132 extending in the second direction. A distance L₇ between the first positioning slot wall 131 and cylindrical cells 22 adjacent to the first positioning slot wall 131 is not less than 69 mm. This dimension is determined by considering the size of the case 100 and difficulty of processing. When the distance L₇ between the first positioning slot wall 131 and the adjacent cylindrical cells 22 is less than 69 mm, the size of the first side wall 213 of the tray 21 and the adjacent cylindrical cells 22 may be reduced, and that is, a width of the fixation flange may be reduced, and in this case, it may be difficult to fix the tray 21 to the case 100, and the processing difficulty is improved.

In the present embodiment, the cylindrical cells 22 adjacent to the first positioning slot wall 131 are cylindrical cells 22 in the first row of cell groups arranged along the second direction Y and cylindrical cells 22 in the last row of cell groups arranged along the second direction Y.

Similarly, a distance L₈ between the second positioning slot wall 132 and cylindrical cells 22 adjacent to the second positioning slot wall 132 is not less than 84.5 mm, so as to reduce difficulty of assembling the case 100 with the tray 21.

In the present embodiment, the cylindrical cells 22 adjacent to the second positioning slot wall 132 are cylindrical cells 22 that are disposed closest to the second positioning slot wall 132.

As shown in FIG. 5, the plurality of rows of cell groups 220 in the cell pack 200 are denoted as the first row of cell groups, the second row of cell groups, ..., and till the twelfth row of cell groups arranged in the second direction Y. The positioning slot has two second positioning slot walls 132, which are a right second positioning slot wall 132 and a left second positioning slot wall 132 along the first direction X. The cylindrical cells 22 adjacent to the right second positioning slot wall 132 are first cylindrical cells 22 in even numbered rows of cell groups arranged along the first direction X. The cylindrical cells 22 adjacent to the left second positioning slot wall 132 are last cylindrical cells 22 in odd numbered rows of cell groups arranged along the first direction X.

It is to be understood that the distance L₇ between the first positioning slot wall 131 and the adjacent cylindrical cells 22 and the distance L₈ between the second positioning slot wall 132 and the adjacent cylindrical cells 22 may be determined according to demands in practice, such that the structure may be compatible with various models of power batteries.

In the present embodiment, the case 100 defines a plurality of positioning slots 13. Each positioning slot 13 receives one cell pack 200. In this way, the cylindrical cells 22 in the power battery may form a packed structure, such that the number of cell packs 200 may be determined easily based on a model of the power battery, and the power battery may be assembled more flexibly. In an embodiment, the case 100 defines four positioning slots 13. The four positioning slots 13 are arranged in two rows and two columns. In other embodiments, the number of positioning slots 13 may be determined according to demands in practice.

In an embodiment, a center distance L₉ between two cylindrical cells 22, which are located in two adjacent positioning slots 13 along the first direction X and are arranged directly opposite to each other, is not less than 188 mm. The value range of the L₉ enables, for the two positioning slots 13 arranged along the first direction X, the tray 21 to have a sufficiently wide edge dimension to allow the tray 21 to be fixed to the case 100 easily. In some embodiments, the tray 21 includes the fixation flange disposed surrounding the circumference of limiting slot 211. The fixation flange laps over the case 100 and is fixed to the case 100. Since the L₉ is not less than 188 mm, the size of the fixation flange of each of two adjacent trays 21 along the first direction X can be ensured, such that the fixation effect of the tray 21 to the case 100 is improved.

Similarly, a center distance L₁₀ between two adjacent cylindrical cells 22, which are located in two adjacent positioning slots 13 arranged along the second direction Y, is not less than 132 mm. Since the center distance L₁₀ is not less than 132 mm, the size of the fixation flange of two adjacent trays 21 along the second direction Y can be ensured, such that the fixation effect of the tray 21 to the case 100 is improved.

In an embodiment, a distance between two adjacent cell packs 200 is not less than 5 mm. That is, a distance between two adjacent trays 21 is not less than 5 mm. In this way, mutual interference between the two adjacent trays 21, which may affect fixation of the cell pack 200, may be prevented.

Similarly, each of a distance between the cell pack 200 and the positioning slot 13 along the first direction and a distance between the cell pack 200 and the positioning slot 13 along the second direction is not less than 5 mm. That is, a distance between the first side wall 213 of the tray 21 and the first positioning slot wall 131 of the positioning slot 13 is not less than 5 mm; and a distance between the second side wall 214 of the tray 21 and the second positioning slot wall 132 of the positioning slot 13 is not less than 5 mm. In this way, it is ensured that the tray 21 can be smoothly mounted into the positioning slot 13, and assembling difficulty may be reduced.

As shown in FIG. 4, the case 100 defines a cell mounting cavity b and an element mounting cavity a. The cell pack 200 is received in the cell mounting cavity b. The element mounting cavity a is configured to receive other electrical parts of the power battery. In some embodiments, the cell mounting cavity b and the element mounting cavity a are arranged along the first direction X.

In the present embodiment, a distance L₁₁ from a side wall of the element mounting cavity a away from the cell mounting cavity b to a center of a cylindrical cell 22 adjacent to the side wall is not less than 280 mm. In this way, the element mounting cavity a can be compatible to receive various Battery Disconnect Units (BDUs) and various battery management systems (BMS).

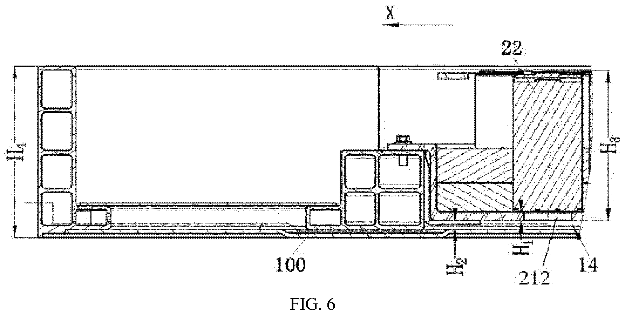

In an embodiment, as shown in FIG. 6, the tray 21 is spaced apart from a bottom surface of the case 100 to form a pressure relief cavity 14. The case 100 further defines an air vent communicated with the pressure relief cavity 14. The tray 21 defines with a through hole 212 that is directly facing an end of the cylindrical cell 22 and is communicating with the pressure relief cavity 14. When the cylindrical cell 22 is having thermal runaway, an explosion-proof valve at a bottom of the cylindrical cell 22 opens, gases and ejections generated in the cylindrical cell 22 enter the pressure relief cavity 14 through the through hole 212 and are further discharged from the air vent. In this way, the cylindrical cell 22 is prevented from combustion or explosion.

In order to ensure the gas to be smoothly discharged, a certain height is to be defined between the bottom of the cylindrical cell 22 and the bottom surface of the pressure relief cavity 14 to reduce a gas releasing pressure and to improve a gas releasing speed. In some embodiments, a sum of a depth H₁ of the through hole 212 and a height H₂ of the pressure relief cavity 14 is not less than 6 mm to ensure a gas releasing effect of the power battery, such that the gases generated by the thermal-runaway cylindrical cell 22 may be discharged rapidly, and safety of the power battery may be improved.

In some embodiments, the depth H₁ of the through hole 212 is in a range of 2mm-10mm, such as 3mm, 4mm, 5mm, 6mm, 7mm, 8mm or 9mm.

In some embodiments, the height H₂ of the pressure relief cavity 14 is in a range from 2mm-10mm, such as 3mm, 4mm, 5mm, 6mm, 7mm, 8mm or 9mm.

In the present embodiment, the height of the cell pack 200 is in a range from 90mm- 130mm, such as 95mm, 100mm, 115mm, 120mm, or 125mm. This height range satisfies heights of various conventional cylindrical cells 22 available in the art. Correspondingly, the height of the power battery is in a range from 100mm-150mm, such as 105mm, 110mm, 115mm, 120mm, 125mm, 130mm, 135mm, 140mm or 145mm.

In some embodiments, a length of the cell pack 200 is in a range from 500mm-1000mm, such as 600mm, 700mm, 800mm, 900mm or 950mm. Correspondingly, a length of the power battery is in a range from 1300mm-2300mm, such as 1400mm, 1500mm, 1600mm, 1700mm, 1800mm, 1900mm, 2000mm, 2100mm or 2200mm.

A width of the cell pack 200 is in a range from 500mm- 1000mm, such as 600mm, 700mm, 800mm, 900mm or 950mm. Correspondingly, a width of the power battery is in a range from 1300mm-2300mm, such as 1400mm, 1500mm, 1600mm, 1700mm, 1800mm, 1900mm, 2000mm , 2100mm or 2200mm.

The present embodiment further provides an electric vehicle including the cell pack described above. The electric vehicle is arranged with the above-described cell pack. Therefore, when a certain one cylindrical cell 22 is having the thermal runaway, the thermal runaway is prevented from spreading to other cylindrical cells 22, and thermal runaway of the entire cell pack can be prevented. In addition, when the electric vehicle is arranged with the above-described cell pack, the endurance life of the electric vehicle is improved, the user's demands can be satisfied, and the user's satisfaction can be improved.

## Claims

1. A cell pack, comprising a tray (21) and a plurality of cylindrical cells (22), wherein,
the plurality of cylindrical cells (22) are arranged on the tray (21); the plurality of cylindrical cells (22) are projected onto the tray (21) along a height direction of the cylindrical cells (22) to generate a plurality of projections, a sum of areas of the plurality of projections is S; an area of a projection of the tray (21) along the height direction of the cylindrical cells (22) is A; and S/A≥ 0.67.

2. The cell pack according to claim 1, wherein, a sum of volumes of the plurality of cylindrical cells (22) is V₁, and a product of the area of the projection of the tray (21) along the height direction of the cylindrical cells (22) multiplied by a height of the cell pack (200) is V₂, and V₁/V₂=0.6 to 0.75.

3. The cell pack according to claim 2, wherein V₁/V₂=0.64.

4. The cell pack according to any one of claims 1 to 3, wherein,
a height of the cell pack (200) is in a range from 90mm-130mm; and/or
a length of the cell pack (200) is in a range from 500mm-1000mm; and/or
a width of the cell pack (200) is in a range from 500mm-1000mm.

5. The cell pack according to any one of claims 1 to 3, wherein, the tray (21) is rectangular, the tray (21) comprises a first side wall (213) and a second side wall (214) adjacent to the first side wall (213); and
a distance L₁ between the first side wall (213) and some cylindrical cells (22) of the plurality of cylindrical cells (22) adjacent to the first side wall (213) is not less than 60 mm, a distance L₂ between the second side wall (213) and some cylindrical cells (22) of the plurality of cylindrical cells (22) adjacent to the second side wall (214) is not less than 80 mm.

6. The cell pack according to any one of claims 1 to 3, wherein, the cell pack comprises a plurality of rows of cell groups (220), each row of cell groups 220 comprises a plurality of cylindrical cells (22);
in each row of cell groups 220, a distance L₃ between two adjacent cylindrical cells (22) is not less than 1 mm; and
in two adjacent rows of the plurality of rows of cell groups (220), a distance L₄ between one cylindrical cell (22) located in one row of the two adjacent rows and another cylindrical cell (22), which is located in the other one row of the two adjacent rows and is adjacent to the one cylindrical cell (22), is not less than 3 mm.

7. The cell pack according to claim 1, wherein, cylindrical cells (22) in one row of the two adjacent rows of cell groups (220) are misaligned to cylindrical cells (22) in the other one row of the two adjacent rows of cell groups (220).

8. The cell pack according to claim 6, wherein any two adjacent cylindrical cells (22) of the plurality of cylindrical cells (22) has an equal interval distance.

9. The cell pack according to any one of claims 1 to 3, wherein, the tray (21) defines a limiting slot (211), the limiting slot (211) has a first limiting slot wall (2111) extending along a first direction and a second limiting slot wall (2112) extending along a second direction, the first direction and the second direction has an intersection angle;
a distance L₅ between the first limiting slot wall (2111) and some cylindrical cells (22) of the plurality of cylindrical cells (22) adjacent to the first limiting slot wall (2111) is not less than 2 mm; and
a distance L₆ between the second limiting slot wall (2112) and some cylindrical cells (22) of the plurality of cylindrical cells (22) adjacent to the second limiting slot wall (2112) is not less than 22 mm.

10. A power battery, comprising: a case (100) and the cell pack (200) according to any one of claims 1-9, wherein the cell pack (200) is arranged inside the case (100).

11. The power battery according to claim 10, wherein the tray (21) is spaced apart from a bottom surface of the case (100) to form a pressure relief cavity (14), the case (100) further defines an air vent communicated with the pressure relief cavity (14), the tray (21) defines with a through hole (212) that is directly facing an end of the cylindrical cells (22) and is communicating with the pressure relief cavity (14).

12. The power battery according to claim 11, wherein a depth H₁ of the through hole (212) is in a range of 2mm-10mm; and/or
a height H₂ of the pressure relief cavity (14) is in a range from 2mm-10mm.

13. The power battery according to claim 11, wherein a sum of a depth H₁ of the through hole (212) and a height H₂ of the pressure relief cavity (14) is not less than 6 mm.

14. The power battery according to any one of claims 10 to 13, wherein, the case (100) defines a positioning slot (13) to receive the tray (21); the positioning slot (13) has a first positioning slot wall (131) extending in a first direction and a second positioning slot wall (132) extending in a second direction; the first direction and the second direction has an intersection angle;
a distance L₇ between the first positioning slot wall (131) and some cylindrical cells (22) of the plurality of cylindrical cells (22) adjacent to the first positioning slot wall (131) is not less than 69 mm; and
a distance L₈ between the second positioning slot wall (132) and some cylindrical cells (22) of the plurality of cylindrical cells (22) adjacent to the second positioning slot wall (132) is not less than 84.5 mm.

15. The power battery according to claim 14, wherein, each cell pack comprises a plurality of rows of cell groups (220), each row of cell groups (220) comprises a plurality of cylindrical cells (22);
the case (100) defines a plurality of positioning slots (13);
a center distance L₉ between two cylindrical cells (13), which are located in two adjacent positioning slots (13) of the plurality of positioning slots (13) along the first direction and are facing directly towards each other, is not less than 188 mm; and
in two adjacent positioning slots (13) of the plurality of positioning slots (13) along the second direction, a center distance L₁₀ between two rows of cells groups (22) that are facing directly towards each other is not less than 132 mm.

16. The power battery according to claim 15, wherein, a distance between the cell pack (200) and another cell pack (200) adjacent thereto is not less than 5 mm.

17. The power battery according to claim 14, wherein a distance between the first positioning slot wall (131) and the cell pack (200) is not less than 5 mm; and/or
a distance between the second positioning slot wall (132) and the cell pack (200) is not less than 5 mm.

18. The power battery according to claim 14, wherein the case (100) defines a cell mounting cavity (b) and an element mounting cavity (a), the cell pack (200) is received in the cell mounting cavity (b); and
a distance L₁₁ from a side wall of the element mounting cavity (a) away from the cell mounting cavity (b) to a center of one cylindrical cell (22) of the plurality of cylindrical cells (22) adjacent to the side wall is not less than 280 mm.

19. The power battery according to claim 10, wherein a height of the power battery is in a range from 100mm-50mm; and/or
a length of the power battery is in a range from 1300mm-2300mm; and/or
a width of the power battery is in a range from 1300mm-2300mm.

20. An electric vehicle, comprising the power battery according to any one of claims 10-19.
